Europäisches Patentamt

European Patent Office

Office européen des brevets

(19)

(11) Publication number: **0 090 487**

**B1**

(12) **EUROPEAN PATENT SPECIFICATION**

(45) Date of publication of patent specification: **27.08.86**

(51) Int. Cl.⁴: **B 60 P 3/34**

(21) Application number: **83300668.7**

(22) Date of filing: **10.02.83**

(54) Expandable van top tent assembly.

(30) Priority: **16.03.82 CA 398476**

(43) Date of publication of application:
**05.10.83 Bulletin 83/40**

(45) Publication of the grant of the patent:
**27.08.86 Bulletin 86/35**

(84) Designated Contracting States:
**AT BE CH DE FR GB IT LI LU NL SE**

(56) References cited:
**DE-A-2 910 438**
**GB-A-1 058 089**
**GB-A-1 194 840**
**US-A-3 489 452**

(73) Proprietor: **Expandable Van Tops Ltd.**
**300 Assiniboine Avenue**
**Winnipeg Manitoba (CA)**

(72) Inventor: **Lange, Jack**
**104, Old Mill Road**
**Winnipeg Manitoba (CA)**

(74) Representative: **Adkins, Michael et al**
**Withers & Rogers 4 Dyer's Buildings**
**Holborn London, EC1N 2JT (GB)**

Courier Press, Leamington Spa, England.

## Description

This invention relates to a vehicle including an expandable van top tent assembly according to the pre-characterising portion of claim 1.

A vehicle of this general type is disclosed in DE—A—2910438 and comprises a vehicle including a body having sides, ends and a roof and having a substantially rectangular opening within said roof defined by a pair of spaced and parallel longitudinally extending edges and a pair of spaced and parallel transverse edges, a cover panel hinged to one edge of the opening and movable between a closed position covering the opening to an open position, a flexible enclosure secured by the lower edges thereof to the other edges of the opening and to the free sides of the cover panel, a plurality of substantially U-shaped hoop braces hinged by the ends thereof to the roof and/or the cover panel adjacent the transverse edges defining the opening, and means to secure said enclosure to said hoops whereby, when said cover panel is opened, the flexible enclosure and hoops are erected by said enclosure to extend over the opening and the cover panel.

In this prior patent, the cover panel is hinged at a forward edge of the opening so that it is movable to a position overlying a cab of the vehicle and supported in that position by a strut extending upwardly from the cab to the cover panel.

However, such an arrangement is disadvantageous in that the manoeuvering of the support strut is difficult to achieve while moving the cover panel into the desired location. In addition, the support strut can be knocked, thus releasing the cover panel which can cause damage to the hinge structure and to the cab. In addition, the arrangement limits the type of vehicle with which the unit can be employed. Furthermore the cover panel cannot be used as a support for a tent arrangement since it overlies the cab which interferes with the positioning of a tent arrangement.

US—A—3489452 discloses a trailer camper in which the top half of the camper is pivotal to one side to a position resting on the ground. Such an arrangement is of course not suitable for a vehicle and there is no suggestion as to how it could be modified for use with a vehicle or as to how it should be modified particularly for use with the above mentioned DE—A—2910438.

According to the invention therefore, a vehicle and cover panel of the type is characterised in that the cover panel is hinged by one side edge thereof to one side edge of the opening so as in the open position to extend substantially horizontally from said one side edge to one side of said vehicle, and in that there is provided a cantilever support structure for supporting said cover panel in the open horizontal position.

Such an arrangement can be erected simply and easily without the necessity for support struts which must be manoeuvered during the erection.

One advantage of the invention is that access to the enclosure is from the interior of the van rather than from the exterior thereof.

A further advantage of the invention is that the cover panel is supported in the horizontal open position by means of tensioning cables thereby eliminating the necessity for vertical supports, tent poles and the like.

A yet further advantage of the invention is to provide a device of the character herewithin described which, when folded and the cover panel closed, is stored between the roof edges and the cover panel.

Embodiments of the invention will now be described in conjunction with the accompanying drawings in which:

Figure 1 is a side elevation of a van with the cover panel shown in the closed position;

Figure 2 is an isometric view of the van showing the cover panel and enclosure in the open position and the screened porch erected;

Figure 3 is a partially schematic cross sectional view of Figure 2;

Figure 4 is a fragmentary cross sectional view similar to Figure 3 including modified hoop braces and showing the cover panel support cables;

Figure 5 is a fragmentary partially sectioned view of the embodiment of Figure 4 showing an alternative attachment of the main hoop brace to the enclosure;

Figure 6 is a fragmentary cross sectional view showing one method of attaching the screened porch;

Figure 7 is a view similar to Figure 6, but showing an alternative method;

Figure 8 is a side view of the embodiment of Figure 4;

Figure 9 is a fragmentary end view of the embodiment of Figure 4 showing the subsidiary hoop braces in the closed position and with the torsion spring closed; and

Figure 10 is a partial cross sectional view of the embodiment of Figure 4 and showing one of the detachable spreader bars in position.

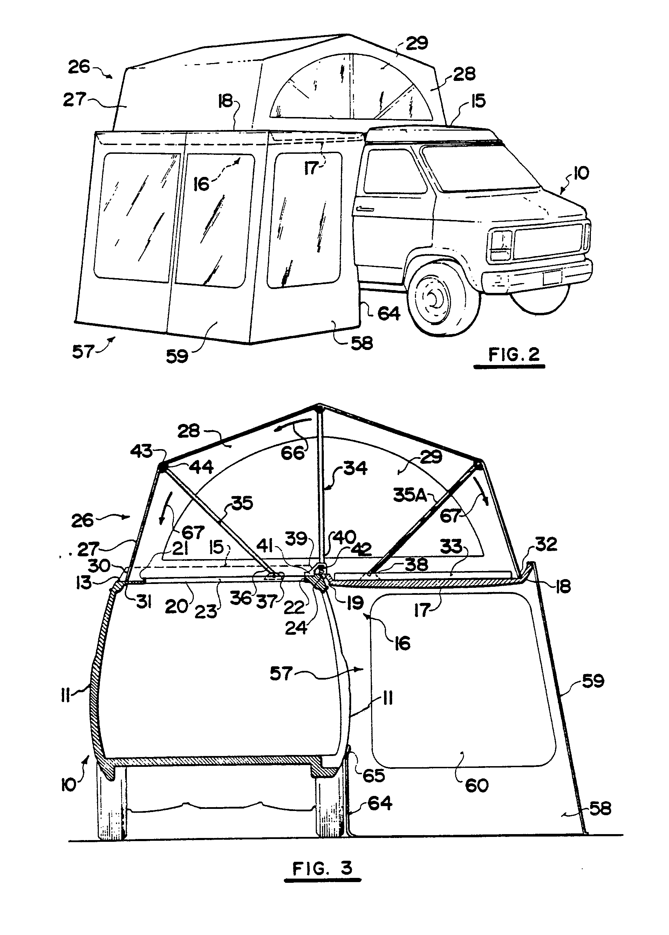

Proceeding therefore to describe the invention in detail, reference to the drawings will show a conventional van collectively designated 10 having sides 11 and rear wall 12 which normally contains doors (not illustrated), and a roof 13. The roof includes the upwardly extending sides 14 and the top panel 15. The present invention constitues an improvement to existing vans by providing a portion of the roof collectively designated 16 in the form of a cover panel having a substantially planar portion 17, a downturned outer, longitudinally extending flange or wall 18 and a downturned, longitudinally extending inner flange 19. A substantially rectangular opening 20 is formed within the roof and defined by spaced and parallel longitudinal edges 21 and 22 and spaced and parallel transverse edges 23, one of which only is shown in Figure 3. The edges 21, 22, 23 are spaced inwardly of the extremities of the cover panel 16 so as to define an overlapping flange portion relative thereto to provide sealing around the outside edge of the opening 20 relative to the cover panel 16 when closed. The panel 16 particularly includes flanges 33 at right angles to the flange 18 and extending downwardly therefrom at the edge thereof and spaced outwardly of the edges 23 for cooperation with the flange portion adjacent thereto.

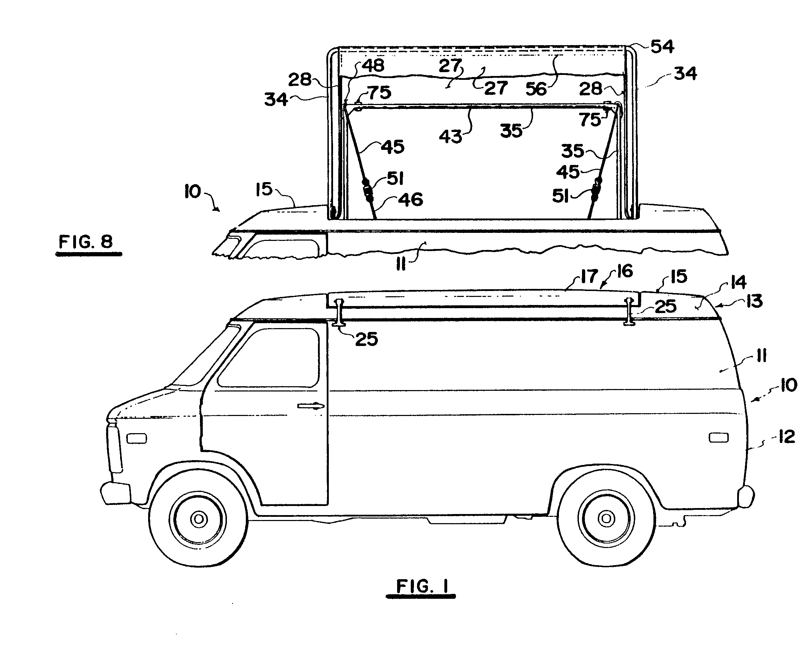

The cover panel 16 is hinged by the flange 19 to the longitudinal edge 22 defining the opening 20 with reference character 24 illustrating the hinge. This enables the cover panel to be moved between the open position shown in Figure 3 and the closed position shown in Figure 1 with conventional latches 25 detachably securing the flange 18 of the cover panel to the side 11. In order to improve sealing between the flange portion at the longitudinal edge 21 and the panel 17, conventional sealing strips (not illustrated) are provided.

A flexible enclosure is provided collectively designated 26 including a side or main panel 27 and end panels 28 sewn together to form the enclosure and being provided with mesh screens 29 in the end panels, if desired. The side or main panel 27 is secured by an edge 30 thereof to a position outboard of the longitudinal edge 21 by conventional means such as nut and bolt assemblies 31 and by the other edge 32 thereof to the inside of the cover panel adjacent the junction between the flange 18 and the panel 17 by similar means (not illustrated). The end panels are secured by similar means (not illustrated) outwardly of the transverse flanges 23 defining the opening and inwardly of the transverse flanges 33 of the cover panel.

A plurality of substantially U-shaped hoop braces is provided including a main hoop brace 34 and subsidiary hoop braces 35, 35A. One subsidiary hoop brace 35 is pivotally secured by the distal ends 36 thereof to brackets 37 on the flange portion adjacent the edge 23 of the opening and the other subsidiary brace 35A is pivotally secured by the ends thereof to brackets 38 adjacent the side flanges 33 of the cover panel 16, as clearly illustrated in Figure 3.

The main hoop brace 34 includes pins 39 extending outwardly from adjacent the ends 40 thereof and these pins engage apertured brackets 41 which are secured to adjacent the ends of the flange portion at the edge 22 of the opening 20. These apertured brackets 41 each include a detent 42 so that when the cover panel is opened to the position shown in Figure 3, the main hoop brace may be elevated manually and the pins 39 hooked into the detents 42 in order to tension the enclosure 26.

The transverse main portions 43 of the hoop braces 34, 35, 35A engage pocket sleeves 44 sewn to the interior of the main enclosure panel 27 so that when the cover panel is opened to the position shown in Figure 3, the flexible enclosure is opened also and this in turn moves the hoop braces to the erected position illustrated in Figure 3, thus forming the erected enclosure.

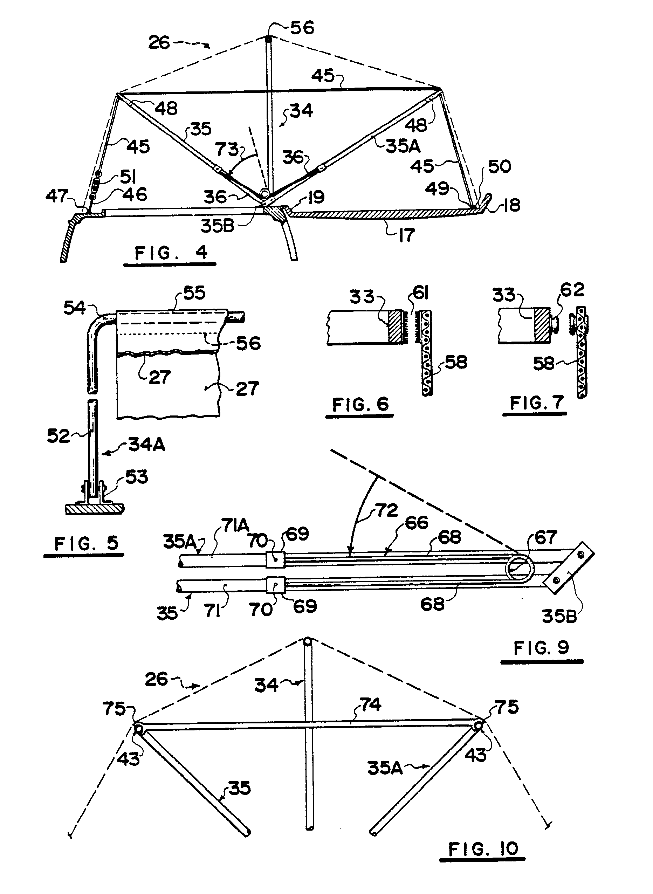

Means to support the cover panel in the horizontal position are omitted from Figure 3 for convenience of illustration but are shown in Figure 4. These means take the form of one or more flexible cables 45 and it is preferable that two such cables be provided, one adjacent each end of the enclosure. The cables are secured by one end 46 thereof to hooks or rings 47 which, in turn, are secured adjacent the lower edge 30 of the main panel 27, said hooks or rings being secured to the flange portion adjacent the edge 21 of the van. The cables then extend to a respective end of each of the cross members 43 of the subsidiary hoop braces 35, 35A sequentially, and are secured to these hoop braces by any conventional means such as clamps 48. The other ends 49 of the cables 45 are secured to hooks or rings 50 situated adjacent the end 32 of the main panel 27 where it is joined to adjacent the outer edge flange 18 of the cover panel. Adjusting turnbuckles 51 may be provided along the length of the cables in order to adjust the tension thereof and the length of these cables is such that when the enclosure is in the open position shown in Figure 3, the cables support the cover panel in a horizontal position as illustrated.

It should also be noted from the embodiment of Figure 8 that the portions of the cables extending between the innermost side hoop braces 35 and the adjacent hooks or rings 47 (defined as the inner securing portion of the cables) incline inwardly and downwardly towards one another due to the fact that the hooks or rings 47 are secured inboard of the edges 23 of the opening 20. This provides necessary side stability to the enclosure when extended and reduces the possibility of sideways movement and subsequent collapse of the enclosure.

Figures 4, 5 and 8 show an alternative embodiment in which the main hoop brace 34A is situated externally of the enclosure whereas all of the hoop braces shown in Figure 3 are situated internally thereof. In this embodiment, the legs 52 of the main hoop brace 34A are pivoted to brackets 53 secured to the roof panel and the cross member portion 54 of the main hoop brace 34A extends through a pocket 55 formed on the outside of the main panel 27 of the enclosure and at the apex 56 thereof.

In addition, this embodiment is modified relative to that of Figure 3 in that the subsidiary hoop braces 35, 35A are pivoted from a central block 35B secured to the flange of the roof adjacent the edge 22 and lying on the same pivot axis as the main hoop brace 34A.

When in the open position shown in Figure 3, a flexible screened porch enclosure collectively designated 57 may be supported by the cover panel 16, said screened porch enclosure consisting of three sides of flexible fabric, two ends 58 and a front panel 59 with screened windows 60 being provided therein. The upper edges of the sides 58 and 59 may be secured to the outer edges of the flanges 33 and 18 either by means of fastening material such as "Velcro" (trade mark) 61 and shown in Figure 6 or press studs 62 as shown in Figure 7 or any other conventional form of detachable securement. The sides 58 and the front 59 hang downwardly and extend between the cover panel and the ground and, if necessary, a canvas skirt 64 may be secured such as by hooks and eyes 65, to along the lower edge of the side of the van and extend downwardly to the ground thus enclosing the space under the van body.

Access to the inside of the enclosure 26 is by means of the aperture 20 in the roof of the van and bedding may be provided upon the inside of the horizontally extending cover panel 16.

When in the folded position, the hoop brace 34 is disengaged from the detents 42 and the cover panel is moved to the closed position shown in Figure 1. The hoop braces 35 and 34 pivot in the direction of arrow 66 and the hoop brace 35A pivots in the direction of arrow 67. With the fabric of the enclosure between adjacent hoop braces concertinering between adjacent hoops and being stored in the space surrounding the aperture 20 and defined by flanges 18, 19 and 33 of the cover panel 16 and the flange portions adjacent the edges 21, 22 and 23 of the opening 20. Latches 25 hold the cover panel in the closed position and sealing relationship with the top of the van.

Figures 4, 8, 9 and 10 show the preferred embodiment of the invention in which a relatively heavy duty torsion spring component is provided collectively designated 66 which includes a loop spring portion 67 with a pair of legs 68 extending therefrom and terminating in blocks 69 which are in turn provided with a pivot or swiveling socket indicated by reference character 70 which in turn is attached one each to each leg 71 and 71A of the subsidiary hoop braces 35 and 35A respectively with the loop spring portion 67 being adjacent the distal ends 36 thereof and brackets 35B.

The attachment of the swiveling sockets 70 may be by means of the pivot pins extending through the sockets and through the legs 71 and 71A respectively. It should also be noted that although one such spring component 66 is shown, it is preferable to have one such component at each end of the subsidiary hoop braces.

These torsion springs normally urged the subsidiary braces apart from one another through approximately an angle indicated by reference character 72 in Figure 9.

However, when the cover panel is in the fully opened position as illustrated in Figure 4, these torsion spring components are then in tension and are attempting to close the cover panel or draw the subsidiary hoops towards one another and the angular extension of the spring thus providing this closing action is illustrated by reference character 73 in Figure 4.

It will therefore be seen that the springs not only act to assist in the opening of the cover panel, but also in the closing thereof.

It will therefore be appreciated that some means is required in order to hold the cover panel 16 in the fully opened position shown in Figure 4. Reference to Figures 8 and 10 will show a spreader bar component 74 having U-shaped sockets 75 on each end thereof which are detachably engaged between the horizontal members or portions 43 of the subsidiary hoop braces 35, 35A, it being understood once again that there is preferably one such spreader bar adjacent each end of the horizontal portion 43.

It will be appreciated that although the specification and drawings show the invention as installed upon a van 10, nevertheless it is rapidly applicable to truck campers, cars such as station wagons and the like.

It will also be appreciated that the cover panel 16 can be supported by detachable diagonal braces (not illustrated) extending between the adjacent side 11 of the van and the outer side of the cover panel 16.

In a further modification (not shown), the spreader bars 74 are replaced by bars which are foldable about a mid point and lockable in their straight condition by an over-center mechanism so that they can remain connected to the subsidiary hoop braces 35, 35A when the cover panel is closed, to avoid problems of separate storage.

Since various modifications, can be made in my invention as hereinabove described, and many apparently widely different embodiments of same made within the spirit and scope of the claims without departing from such spirit and scope, it is intended that all matter contained in the accompanying specification shall be interpreted as illustrative only and not in a limiting sense.

**Claims**

1. A vehicle including a body having sides (11), an end (12) and a roof (13) and having a substantially rectangular opening (20) within said roof defined by a pair of spaced and parallel longitudinally extending edges (21, 22) and a pair of spaced and parallel transverse edges (23), a cover panel (16) hinged to one edge (22) of the opening and movable between a closed position covering the opening to an open position, a flexible enclosure (26) secured by the lower edges thereof to the other edges of the opening and to the free sides of the cover panel, a plurality of substantially U-shaped hoop braces (34, 35, 35A) hinged by the ends thereof to the roof and/or to the cover panel adjacent the transverse edges (23) defining the opening, and means (44, 45) to secure said enclosure to said hoops whereby, when said cover panel is opened, the flexible enclosure and the hoops are erected by said enclosure to extend over the opening and the cover panel, characterised in that the cover panel (16) is hinged by one side edge thereof to one side edge (22) of the opening (20) so as, in the open position, to extend substantially horizontally from said one side edge (22) to one side of the vehicle, and in that there is provided a cantilever support structure (45) for supporting said cover panel (16) in the open horizontal position.

2. A vehicle according to Claim 1 characterised in that said means to secure said enclosure (26) to said hoops includes loop sleeves (44, 55) in said enclosure such that said hoop braces (34, 35, 35A) extend through said loop sleeves.

3. A vehicle according to Claim 1 or 2 characterised in that said hoop braces include a main hoop brace (34) and two subsidiary hoop braces (35, 35A), one upon each side of said main hoop brace, said main hoop brace being situated substantially vertically when said enclosure (26) is erected, said subsidiary hoop braces extending upwardly and outwardly upon each side of said main hoop brace.

4. A vehicle according to Claim 3 characterised in that said main hoop brace (34) is situated externally of said enclosure (26), said subsidiary hoop braces (35, 35A) being situated internally of said enclosure.

5. A vehicle according to Claim 4 characterised in that said main hoop brace (34) includes means (39) to detachably secure same in an elevated relationship to said enclosure (26) when said enclosure is in the erected position and to lock said hoop brace in said elevated position thereby tensioning said enclosure.

6. A vehicle according to any of the preceding claims characterised in that said cantilever support structure supporting said cover panel (16) in the open, horizontal position includes at least one flexible cable (45) secured by one end (46) thereof to the other longitudinal edge (21) of said opening (20), said cable extending to and being operatively secured to at least one of said U-shaped hoop braces (35, 35A) and being secured by the other end thereof to the distal edge (18) of said cover panel.

7. A vehicle according to Claim 6, characterised in that said cable (45) is secured by said one end (46) thereof to said other longitudinal edge (21) defining said opening at a point inboard of the ends of the enclosure (26) whereby the inner securing portion of said cable inclines downwardly and inwardly towards said other longitudinal edge when said enclosure is opened thereby reducing sideways movement thereof.

8. A vehicle according to any of the preceding claims characterised in that the cover panel (16) includes downwardly depending flanges (18, 19, 33) which engage said roof (13) outwardly spaced from the opening (20) when in the closed position, whereby said flexible enclosure (26) folds between said hoops (34, 35, 35A) within said flanges and outside the opening when said cover panel is closed.

9. A vehicle according to any of the preceding claims characterised in that a flexible screened porch enclosure (57) is detachably secured to the free edges of said cover panel (16) when in said open horizontal position and depends downwardly therefrom and extends from said cover panel to the ground surface.

10. A vehicle according to any of the preceding claims characterised in that spring means (66) normally urges said hoop braces (35, 35A) apart when said cover panel (16) is in the closed position through a first portion of the arc travelled by said subsidiary hoop braces when moving towards the open position, and normally urges said hoop braces towards one another through a first portion of the arc travelled by said subsidiary hoop braces when moving towards the closed position, and a spreader bar (74) is arranged such that when the cover panel is in the open position, said spreader bar extends rigidly between two of said hoop braces (35, 35A) to maintain the hoop braces a defined distance apart.

**Patentansprüche**

1. Fahrzeug, bestehend aus einer Karosserie mit Seiten (11), einem Heck (12) und einem Dach (13) und mit einer mit wesentlichen rechtwinkligen Öffnung (20) innerhalb des Daches, die durch ein Paar beabstandeter und sich parallel längs erstreckender Kanten (21, 22) und einem Paar beabstandeter und Querkanten (23) gebildet ist, einem Dacheinsatz (16), der an einer Kante (22) der Öffnung angelenkt und zwischen einer geschlossenen Stellung, in der er die Öffnung abdeckt, und einer offenen Stellung bewegbar ist, einer flexiblen Kabine (26), die durch ihre unteren Kanten an den anderen Kanten der Öffnung und an den freien Seiten des Dacheinsatzes befestigt ist, einer Vielzahl von im wesentlichen U-förmigen Bügelstreben (34, 35, 35A), die mit ihren Enden an dem Dach und/oder dem Dacheinsatz neben den die Öffnung bildenden Querkanten (23) angelenkt sind, und aus einer Einrichtung (44, 45), für die Befestigung der Kabine an den Bügeln, wobei bei geöffnetem Dacheinsatz die flexible Kabine und die Bügel mittels der Kabine zum Erstrecken über die Öffnung und den Dacheinsatz aufgestellt sind, dadurch gekennzeichnet, daß der Dacheinsatz (16) an seiner einen Seitenkante an einer Seitenkante (22) der Öffnung (20) derart angelenkt ist, daß er sich in der offenen Stellung im wesentlichen horizontal von der einen Seitenkante (22) zu der einen Seite des Fahrzeugs erstreckt, und daß für das Halten des Dacheinsatzes (16) in der offenen horizontalen Stellung eine Auslegerhalteanordnung (45) vorgesehen ist.

2. Fahrzeug nach Anspruch 1, dadurch gekennzeichnet, daß die Einrichtung zur Befestigung der Kabine (26) an den Bügeln Ringhülsen (44, 55) in der Kabine in der Weise aufweist, daß sich die Bügelstreben (34, 35, 35A) durch die Ringhülsen erstreckt.

3. Fahrzeug nach Anspruch 1 oder 2, dadurch gekennzeichnet, daß zu den Bügelstreben eine Hauptbügelstrebe (34) und zwei Nebenbügelstreben (35, 35A) gehören, von denen sich eine an jeder Seite der Hauptbügelstrebe befindet, wobei die Hauptbügelstrebe im wesentlichen senkrecht angeordnet ist, wenn die Kabine (26) aufgestellt ist, und wobei sich die Nebenbügelstreben nach oben und nach außen auf jeder Seite der Hauptbügelstrebe erstrecken.

4. Fahrzeug nach Anspruch 3, dadurch gekennzeichnet, daß die Hauptbügelstrebe (34) außerhalb der Kabine (26) liegt und daß die Nebenbügelstreben (35, 35A) innerhalb der Kabine angeordnet sind.

5. Fahrzeug nach Anspruch 4, dadurch gekennzeichnet, daß die Hauptbügelstrebe (34) eine Einrichtung (39) aufweist, um diese in einer angehobenen Zuordnung lösbar an der Kabine (26) zu befestigen, wenn sich die Kabine in der aufgestellten Stellung befindet, und um die Bügelstrebe in der angehobenen Stellung zu arretieren, um dadurch die Kabine zu spannen.

6. Fahrzeug nach einem der vorangehenden Ansprüche, dadurch gekennzeichnet, daß die den Dacheinsatz (16) in der offenen horizontalen Stellung tragenden Auslegerhalteanordnung wenigstens ein flexibles Seil (45) aufweist, das mit seinem einen Ende (46) an der anderen Längskante (21) der Öffnung (20) befestigt ist, wobei sich das Seil zu wenigstens einem der U-förmigen Bügelstreben (35, 35A) erstreckt und an wenigstens einem derselben funktionell befestigt ist und wobei das Seil mit seinem anderen Ende an der entfernt liegenden Kante (18) des Dacheinsatzes befestigt ist.

7. Fahrzeug nach Anspruch 6, dadurch gekennzeichnet, daß das Seil (45) mit seinem einen Ende (46) an der die Öffnung bildenden anderen Längskante (21) an einer Stelle befestigt ist, die von den Enden der Kabine (26) nach innen gerichtet ist, wobei der innere Befestigungsabschnitt des Seils nach unten und nach innen in Richtung auf die andere Längskante geneigt ist, wenn die Kabine geöffnet ist, um dadurch deren seitliche Bewegung zu verringern.

8. Fahrzeug nach einem der vorangehenden Ansprüche, dadurch gekennzeichnet, daß der Dacheinsatz (16) nach unten weisende Flansche (18, 19, 33) aufweist, die an das Dach (13) von der Öffnung (20) nach außen beabstandet in der geschlossenen Stellung angreifen, wobei sich die flexible Kabine (26) zwischen den Bügeln (34, 35, 35A) innerhalb der Flansche und außerhalb der Öffnung faltet, wenn der Dacheinsatz geschlossen ist.

9. Fahrzeug nach einem der vorangehenden Ansprüche, dadurch gekennzeichnet, daß eine flexible abgeschirmte Vorkabine (57) lösbar an den freien Kanten des Dacheinsatzes (16) befestigt ist, wenn sich dieser in der offenen horizontalen Stellung befindet, und von diesem nach unten herabhängt und sich von dem Dacheinsatz zu der Bodenoberfläche erstreckt.

10. Fahrzeug nach einem der vorangehenden Ansprüche, dadurch gekennzeichnet, daß eine Federeinrichtung (66) normalerweise die Bügelstreben (35, 35A) voneinander wegdrückt, wenn sich der Dacheinsatz (16) in der geschlossenen Stellung befindet und sich in Richtung auf die offene Stellung über einen ersten Abschnitt des von den Nebenbügelstreben zurückgelegten Bogens bewegt und normalerweise die Bügelstreben zueinander über einen ersten Abschnitt des von den Nebenbügelstreben zurückgelegten Bogens bei Bewegung in Richtung auf die geschlossene Stellung drückt, und daß eine Spreizstange (74) derart angeordnet ist, daß sie sich fest zwischen zwei der Bügelstreben (35, 35A) erstreckt, um die Bügelstreben in einer definierten Entfernung voneinander zu halten, wenn sich der Dacheinsatz in der offenen Stellung befindet.

**Revendications**

1. Véhicule comportant un corps ayant des côtés (11) une extrémité (12) et un toit (13) ainsi qu'une ouverture (20) essentiellement rectangulaire dans le toit, cette ouverture étant définie par une paire de bords (21—22) espacés et parallèles longitudinalement ainsi qu'une paire de bords (23) espacés et parallèles transversalement ainsi qu'un panneau de couverture (16) fixé par articulation à un bord (23) de l'ouverture et mobile entre une position fermée dans laquelle il recouvre l'ouverture, et une position ouverte, une enfin souple (26) aux bords inférieurs de ce panneau, et aux autres bords de l'ouverture, ainsi qu'aux côtés libres du panneaux de couverture, un ensemble d'arceaux (34, 35, 35A) essentiellement en forme de U, articulés par leurs extrémités au toit/ou panneau de couverture au voisinage des bords transversaux (23) délimitant l'ouverture et des moyens (44—45) pour fixer cette enceinte aux arceaux de sorte que lorsqu'on ouvre le panneau de couverture, l'enceinte souple et les arceaux soient redressés par l'enceinte de façon à venir par dessus de l'ouverture et le panneau de couverture, caractérisé en ce que le panneau de couverture (16) est relié par articulation le long de l'un de ses bords à un bord latéral (22) de l'ouverture (20) de façon qu'en position ouverte il soit pratiquement horizontal en partant d'un bord latéral (22) jusqu'à un côté du véhicule et constitue une structure de support (45) en porte à faux portant le panneau de couverture (16) en position horizontale ouverte.

2. Véhicule suivant la revendication 1, caractérisé en ce que les moyens de fixation de l'enceinte (26) aux arceaux comportent des manchons (44—45) prévus dans l'enceinte de façon que les arceaux (34, 35, 35A) puissent passer dans les manchons.

3. Véhicule suivant la revendication 1 ou 2, caractérisé en ce que les arceaux se composent d'un arceau principal (34) et de deux arceaux auxiliaires (35—35A), de chaque côté de l'arceau principal, l'arceau principal se trouvant en position verticale lorsque l'enceinte (26) est redressée et les arceaux auxiliaires sont diriges vers le haut et vers l'extérieur de chaque côté de l'arceau principal.

4. Véhicule suivant la revendication 3, caractérisé en ce que l'arceau principal (34) est situé à l'extérieur de l'enceinte (26) et les arceaux auxiliaires (35—35A) se trouvent à l'intérieur de l'enceinte (26).

5. Véhicule suivant la revendication 4, caractérisé en ce que l'arceau principal (34) comporte un moyen (39) pour fixer celui-ci de manière amovible en position redressée à l'enceinte (26) lorsque l'enceinte est en position redressée et pour bloquer cet arceau dans cette position redressée de manière à tendre l'enceinte.

6. Véhicule suivant l'une quelconque des revendications précédentes, caractérisé en ce que la structure de support en porte à faux qui supporte le panneau de couverture (16) en position horizontale ouverte se compose d'au moins un câble souple (45) fixé par une extrémité (46) à l'autre bord longitudinal (21) de l'ouverture (20), ce câble étant dirigé et relié de manière à coopérer avec au moins l'un des arceaux (35, 36, 35A) en forme de U en étant fixé par son autre extrémité à l'extrémité éloignée (18) du panneau de couverture.

7. Véhicule suivant la revendication 6 caractérisé en ce que le câble (45) est fixé par une extrémité (46) à l'autre bord longitudinal (21) définissant l'ouverture, en un point entre les extrémités de l'enceinte (26) de façon que la partie de fixation interne du câble soit inclinée vers le bas et vers l'intérieur en direction de l'autre bord longitudinal lorsque l'enceinte est ouverte de façon à réduire les mouvements latéraux.

8. Véhicule suivant l'une quelconque des revendications précédentes caractérisé en ce que le panneau de couverture (16) comporte des brides (18, 19, 33) dirigées vers le bas et qui coopérant avec le toit (13), en étant espacées extérieurement par rapport à l'ouverture (20) en position de fermeture, de manière que cette enceinte (28) se replie entre les arceaux (34, 35, 35A) à l'intérieur des brides et à l'extérieur de l'ouverture lorsque le panneau de couverture est fermé.

9. Véhicule suivant l'une quelconque des revendications précédentes caractérisé en ce qu'une enceinte formant auvent (57) en toile souple est reliée de façon amovible aux bords libres de ce panneau de couverture (16) lorsque celui-ci est en position horizontale ouverte et cette enceinte pend vers le bas du panneau et relie ce panneau de couverture à la surface du sol.

10. Véhicule suivant l'une quelconque des revendications précédentes caractérisé en ce qu'un moyen élastique (66) écarte normalement les arceaux (35, 35A) lorsque le panneau d'ouverture (16) est en position fermée, sur une première partie de l'arc balayé par les arceaux auxiliaires lorsque ceux-ci vont en position d'ouverture et qui poussent normalement les arceaux l'un vers l'autre en parcourant une première partie de l'arc décrit par les arceaux auxiliaires lorsque ceux-ci sont déplacés vers la position de fermeture, et une barre d'écartement (74) est prévue de façon que lorsque le panneau de couverture est en position d'ouverture, cette barre d'écartement soit disposée rigidement entre deux des arceaux (35—35A) pour maintenir ces arceaux écartés à une distance déterminée.

FIG. 8

FIG. I

FIG.2

FIG. 3

FIG. 4

FIG. 5

FIG. 6

FIG. 7

FIG. 9

FIG. 10